## Europäisches Patentamt
## European Patent Office
## Office européen des brevets

(19)

(11) Numéro de publication: **0 063 504**
**A1**

# (12) DEMANDE DE BREVET EUROPEEN

(21) Numéro de dépôt: **82400459.2**

(51) Int. Cl.³: **G 02 B 7/26**

(22) Date de dépôt: **12.03.82**

(30) Priorité: **27.03.81 FR 8106186**

(43) Date de publication de la demande:
**27.10.82 Bulletin 82/43**

(84) Etats contractants désignés:
**DE GB NL SE**

(71) Demandeur: **THOMSON-CSF**
**173, Boulevard Haussmann**
**F-75379 Paris Cedex 08(FR)**

(72) Inventeur: **Richin, Philippe**
**THOMSON-CSF SCPI 173, bld Haussmann**
**F-75360 Paris Cedex 08(FR)**

(72) Inventeur: **d'Auria, Luigi**
**THOMSON-CSF SCPI 173, bld Haussmann**
**F-75360 Paris Cedex 08(FR)**

(72) Inventeur: **Combemale, Yves**
**THOMSON-CSF SCPI 173, bld Haussmann**
**F-75360 Paris Cedex 08(FR)**

(72) Inventeur: **Jacques, André**
**THOMSON-CSF SCPI 173, bld Haussmann**
**F-75360 Paris Cedex 08(FR)**

(54) **Micro-optique de couplage entre un laser semi-conducteur et une fibre optique.**

(57) Une micro-optique de couplage $(L_2)$ entre un laser semi-conducteur (1) et une fibre optique $(F_2)$, pour laquelle les rayons réfléchis pas cette microlentille $(L_2)$ ne gênent pas le fonctionnement du laser.

La lentille $(L_2)$ est soudée à l'extrémité de la fibre $(F_2)$ et la normale au plan d'intersection entre cette lentille $(L_2)$ et la fibre fait un angle $(\theta)$ avec l'axe z de la fibre. Ainsi les rayons réfléchis par cet interface $(P_2)$ passent en dehors de la face de sortie $(F_s)$ du laser (1).

Application aux télécommunications optiques.

EP 0 063 504 A1

./...

FIG.2

## MICRO-OPTIQUE DE COUPLAGE ENTRE UN
## LASER SEMI-CONDUCTEUR ET UNE FIBRE OPTIQUE

La présente invention a pour objet une micro-optique de couplage, entre un laser semi-conducteur et une fibre optique.

Pour les télécommunications optiques, on utilise généralement comme source un laser semi-conducteur modulé et comme milieu de propagation une fibre optique. Il est important de coupler le maximum d'énergie fournie par le laser semi-conducteur dans la fibre.

Diverses optiques de couplage laser semi-conducteur fibre sont connues notamment une microlentille soudée à l'extrémité de la fibre, l'axe optique de cette microlentille coïncidant avec l'axe de la fibre. Cette lentille peut être réalisée directement par trempage de l'extrêmité de la fibre dans une goutte de verre, plus fusible que le verre de la fibre.

Ce dispositif de couplage, suivant l'art antérieur, pour lequel le plan d'intersection entre la lentille et la fibre est perpendiculaire à l'axe de fibre, a le désavantage que la puissance réfléchie par cet interface lentille-fibre est refocalisée sensiblement dans le plan de sortie du laser. L'onde ainsi réfléchie perturbe le fonctionnement du laser, à cause des interférences entre les puissances émises et réfléchies. La différence de phase entre ondes émise et réfléchie dépend de la distance entre le laser et la lentille. Si $\lambda$ est la longueur d'onde émise par le laser, une variation de distance de $\lambda/4$, fait passer cette différence de phase de 0 à 180°.

Une telle perturbation par la puissance réfléchie se traduit par des fluctuations de la puissance fournie par la source laser en fonction des vibrations et des variations thermiques.

Pour remédier à cet inconvénient, le dispositif de couplage suivant l'invention, comprend une lentille soudée à l'extrêmité d'une fibre, le plan d'intersection entre la lentille et la fibre n'étant pas perpendiculaire à l'axe de la fibre.

Ainsi les rayons réfléchis par l'interface lentille-fibre ne passent pas par la face de sortie du laser.

Brièvement, c'est un dispositif de couplage d'un laser à semi-conducteur et d'une fibre optique ayant à son extrémité une lentille sphérique, caractérisé par le fait que la normale au plan d'intersection de la fibre et de la lentille fait un angle prédéterminé avec l'axe de la fibre.

D'autres caractéristiques et avantages ressortiront de la description qui va suivre illustrée par les figures qui représentent :

- figure 1, un dispositif de couplage laser semi-conducteur/fibre suivant l'art antérieur ;

- figure 2, un dispositif de couplage laser semi-conducteur/fibre optique suivant l'invention ;

- figure 3, un dispositif de réalisation de la lentille de couplage.

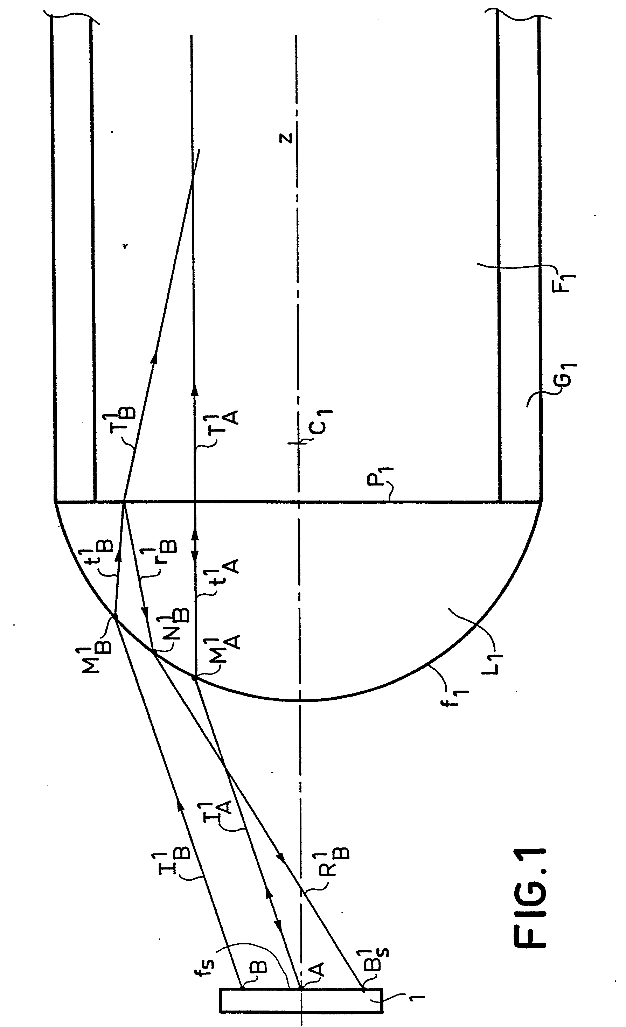

La figure 1 montre un dispositif de couplage d'un laser semi-conducteur 1 avec une fibre optique $F_1$, suivant l'art antérieur. Cette fibre $F_1$ se compose d'un coeur et d'une gaine $G_1$ de plus faible indice de réfraction que le coeur. Une microlentille $L_1$ est formée par trempage de la fibre $F_1$ dans une goutte de verre ramolli. Le plan de contact $P_1$ entre la lentille $L_1$ et la fibre $F_1$ est perpendiculaire à l'axe z de la fibre. L'axe z contient également le centre de courbure $C_1$ de la face sphérique d'entrée $f_1$ de la lentille $L_1$.

Un laser semi-conducteur 1, généralement du type GaAs/GaAlAs, est relié à un générateur modulé (non représenté) et le centre A de sa face de sortie $f_s$ est placé sur l'axe z sensiblement au foyer de la lentille $L_1$.

Sur la figure on a représenté un rayon $I_A^1$ issu du point A et incident sur la lentille $L_1$ en $M_A^1$. Le rayon transmis $t_A^1$ entre dans la fibre $F_1$ par le plan $P_1$, formant le rayon couplé dans la fibre sensiblement parallèle à z, $T_A^1$. Une partie de la puissance incidente sur le plan $P_1$ est réfléchie parallèlement au rayon $t_A^1$ et après réfraction en $M_A$ repasse sensiblement par le point A et entre dans la cavité laser.

On considère également un rayon $I_B^1$ issu d'un point B, où AB est le long de la jonction du laser, qui entre dans la lentille en $M_B^1$, est transmis dans cette lentille $L_1$ suivant $t_B^1$ et couplé dans la fibre suivant $T_B^1$. Une partie de la puissance est réfléchie suivant $r_B^1$ sort de la lentille en $N_B^1$ suivant $R_B^1$ et coupe la face de sortie $f_s$ du laser en $B_S^1$. $B_S^1$ est sensiblement le symétrique de B par rapport à A. Ce rayon réfléchi $R_B^1$ vient également perturber la cavité du laser.

Si $n_F$ et $n_L$ sont respectivement les indices de réfraction du verre composant le coeur de la fibre $F_1$ et la lentille $L_1$, le coefficient de réflexion en puissance est donné par :

$$R = \left(\frac{n_L - n_F}{n_L + n_F}\right)^2$$

pour $n_F = 1,46$ et $n_L = 1,86$ on trouve $R = 0,0145$.

Une telle puissance réfléchie suffit pour perturber notablement le fonctionnement du laser.

La puissance réfléchie directement par la face d'entrée $f_1$ de la lentille $L_1$ peut être réduite par une couche antiréfléchissante. Mais de toute façon les rayons réfléchis divergent et ne perturbant que de façon négligeable la cavité laser.

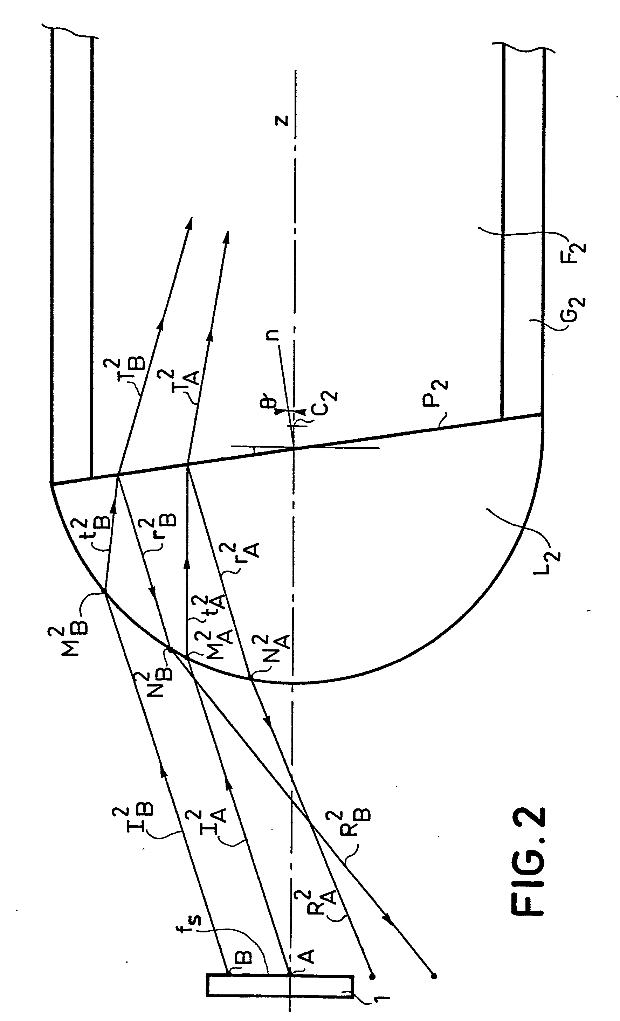

Le dispositif de couplage suivant l'invention est montré par la figure 2. La fibre $F_2$ de gaine optique $G_2$ et d'axe z a à son extrémité une lentille soudée $L_2$ d'axe z. La normale n au plan d'intersection $P_2$ de la lentille $L_2$ et la fibre $F_2$ fait un angle $\Theta$ avec l'axe z. Un rayon $I_A^2$ issu du centre A du laser sur l'axe Oz entre la lentille $L_2$ en $M_A^2$ est transmis suivant $t_A^2$ dans la lentille $L_2$ et couplé dans la fibre suivant $T_A^2$. Le rayon réfléchi sur le plan $P_2$, $r_A^2$ sort de la lentille $N_A^2$ suivant $R_A^2$. Ce rayon $R_A^2$ passe en dehors de la face de sortie $f_s$ du laser et donc ne perturbe pas son fonctionnement.

De même un rayon $I_B^2$ issu du point B entrant dans la lentille $L_2$ en $M_A^2$ est transmis suivant $t_B^2$ et couplé dans la fibre $F_2$, en $t_B^2$. Le rayon réfléchi $r_B^2$ par le plan incliné $P_2$ sort de la lentille en $N_B^2$ et sort suivant $R_B^2$ sans perturber le laser.

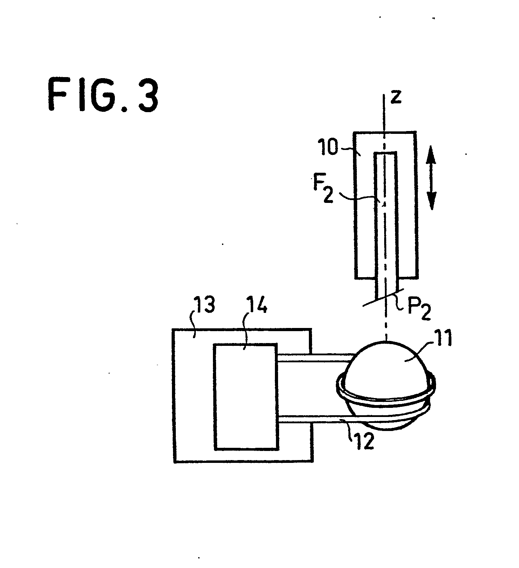

Pour réaliser une lentille rapportée suivant l'invention on utilise le montage de la figure 3.

La fibre $F_2$ est coupée par un diamant et cassée suivant le plan $P_2$ d'angle d'inclinaison $\Theta$ et montée sur un dispositif de translation 10 suivant z. Une goutte de verre en fusion 11 est retenue par un filament chauffant 12 porté par un porte filament 13, également mobile. Un générateur électrique 14 fournit la puissance électrique pour le chauffage.

La température du verre de la goutte étant inférieure à la température de ramollissement du verre de la fibre $F_2$.

4

## REVENDICATIONS

1. Dispositif de couplage d'un laser à semi-conducteur (1) et d'une fibre optique ($F_2$) ayant à son extrémité une lentille sphérique ($L_2$), caractérisé par le fait que la normale (n) au plan d'intersection ($P_2$) de la fibre ($F_2$) et de la lentille ($L_2$) fait un angle prédéterminé ($\Theta$) non nul avec l'axe de la fibre (3).

2. Dispositif de couplage suivant la revendication 1, caractérisé par le fait que l'angle ($\Theta$) de la normale (n) au plan d'intersection ($P_2$) avec la lentille $L_2$ est tel que les rayons réfléchis par le plan $P_2$ n'intersectent pas la face de sortie ($f_s$) du laser.

3. Dispositif de couplage suivant la revendication 1, caractérisé par le fait que la lentille est dans un verre plus fusible que le verre de la fibre.

4. Procédé de réalisation d'un dispositif de couplage suivant la revendication 3, caractérisé par le fait qu'il comprend les étapes suivantes :
- préparation d'une extrémité de la fibre $F_2$ pour obtenir le plan incliné ($P_2$) ;
- mise en contact de l'extrémité de la fibre avec une goutte de verre en fusion ;
- éloignement de la fibre.

5. Procédé selon la revendication 4, caractérisé en ce que la goutte de verre en fusion est retenue par un filament chauffant.

6. Procédé selon l'une des revendications 4 et 5, caractérisé en ce que la préparation de l'extrémité de la fibre comprend la cassure de la fibre au moyen d'un diamant.

FIG.1

FIG.2

$M_B^2$

$I_B^2$

$f_s$

B

$I_A^2$

$N_B^2$

$t_B^2$

$r_B^2$

$T_B^2$

$M_A^2$

$t_A^2$

$T_A^2$

$r_A^2$

$N_A^2$

A

$R_A^2$

$R_B^2$

1

$\theta$

n

$C_2$

z

$P_2$

$L_2$

$G_2$

$F_2$

# FIG.3

**0063504**

Numéro de la demande

Office européen
des brevets

**RAPPORT DE RECHERCHE EUROPEENNE**

**EP  82 40 0459**

## DOCUMENTS CONSIDERES COMME PERTINENTS

| Categorie | Citation du document avec indication. en cas de besoin. des parties pertinentes | Revendication concernee | CLASSEMENT DE LA DEMANDE (Int. Cl. ³) |
|---|---|---|---|
| X | APLLIED OPTICS, vol.19, no.14, 15 juillet 1980, New York (US) R. ULRICH et al.: "Beam-to-fiber coupling with low standing wave ratio", pages 2453-2456 * pages 2454,2455 * | 1 | G 02 B  7/26 |
| A | EP-A-0 025 728 (THOMSON) * revendications 7,9-11 * | 3-6 | |
| A | IEEE JOURNAL OF QUANTUM ELECTRONICS, vol.QE-16, no.10, octobre 1980, IEEE, New York (US) J.I. SAKAI et al.: "Design of a miniature lens for semiconductor laser to single-mode fiber coupling", pages 1059-1067 * pages 1059-1061 * | 1 | |
| A | EP-A-0 005 683 (BATTELLE) * résumé; figure 1 * | 1 | G 02 B  7/26<br>G 02 B  3/00 |
| A | DE-A-2 625 097 (R. BOSCH) * revendications; figures * | 1 | |

DOMAINES TECHNIQUES
RECHERCHES (Int. Cl. ³)

Le présent rapport de recherche a ete etabli pour toutes les revendications

| Lieu de la recherche | Date d achevement de la recherche | Examinateur |
|---|---|---|
| LA HAYE | 19-07-1982 | PFAHLER R. |

CATEGORIE DES DOCUMENTS CITES

X : particulierement pertinent à lui seul
Y : particulierement pertinent en combinaison avec un autre document de la même categorie
A : arriere-plan technologique
O : divulgation non-ecrite
P : document intercalaire

T : theorie ou principe a la base de l'invention
E : document de brevet anterieur. mais publie à la date de depôt ou apres cette date
D : cite dans la demande
L : cite pour d autres raisons

& : membre de la même famille. document correspondant